(19) Europäisches Patentamt
European Patent Office
Office européen des brevets

(11) **EP 4 687 270 A1**

(12) **EUROPEAN PATENT APPLICATION**

(43) Date of publication:
**04.02.2026 Bulletin 2026/06**

(21) Application number: **24191567.7**

(22) Date of filing: **29.07.2024**

(51) International Patent Classification (IPC):
**H02M 1/00** $^{(2006.01)}$  **H02M 1/12** $^{(2006.01)}$
**H02M 5/458** $^{(2006.01)}$

(52) Cooperative Patent Classification (CPC):
**H02M 1/0043; H02M 1/008; H02M 1/12;
H02M 5/458**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Aktiengesellschaft
80333 München (DE)**

(72) Inventors:
• **Kenney, Richard
  Haslington, Crewe CW1 5RT (GB)**
• **Lahlou, Taha
  91052 Erlangen (DE)**
• **Thakur, Sumeet Singh
  Macclesfield SK11 7PL (GB)**

(74) Representative: **Siemens Patent Attorneys
Postfach 22 16 34
80506 München (DE)**

(54) **POWER SUPPLY SYSTEM**

(57) A power supply system for supplying electrical power to at least one electrical device is disclosed. The power supply system comprises at least one rectifier and at least one dc link, the at least one rectifier being configured to convert multi-phase AC power input from an AC power source into DC power and output the DC power to the at least one DC link; a plurality of inverters, each inverter configured to convert DC power in the at least one DC link into AC power and output pulse-width modulated (PWM) pulsed AC power suitable for powering the at least one electrical device, and a controller configured to control switching of the plurality of inverters to cause the PWM pulses of the inverters power outputs to be mutually phase-shifted.

FIG 2

$\Theta_p(k) = 2\pi(k-1)/N$  $\omega_c$ = PWM frequency
N = Total number of drives  k = drive number (1, 2...N)

$\Theta_p(N) = 2\pi(N-1)/N$  $\omega_c$ = PWM frequency

EP 4 687 270 A1

**Description**

Field of the Disclosure

The present disclosure relates to a power supply system for supplying electrical power to electrical devices.

Background of the Disclosure

Inverter switching in power electronics can result in switching currents and high frequency emissions to the power source. These current emissions disadvantageously add to heating and thus power losses in the drive cables and the power supply network, and impose filtering and size requirements on device electromagnetic compatibility filters.

Summary of the Disclosure

An object of aspects of the present disclosure is to provide an apparatus and a method for supplying electrical power to electrical devices. In particular, aspects of the present disclosure aim to reduce high frequency current emissions from electrical devices by controlling switching of inverters of a power supply system to cause the outputs of the inverters to be mutually phase-shifted, and to thereby reduce a magnitude of harmonic emissions.

A first aspect of the present disclosure provides a power supply system for supplying electrical power to at least one electrical device, the system comprising: at least one rectifier and at least one DC link, the at least one rectifier being configured to convert multi-phase AC power input from an AC power source into DC power and output the DC power to the at least one DC link; a plurality of inverters, each inverter configured to convert DC power in the at least one DC link into AC power and output pulse-width modulated (PWM) pulsed AC power suitable for powering the at least one electrical device, and a controller configured to control switching of the plurality of inverters to cause the PWM pulses of the inverters power outputs to be mutually phase-shifted.

In some applications it may be desirable for a power supply to be physically compact. Capacitors provided in a DC link may typically be relatively large in size, with the objective of achieving relatively high energy storage and smoothing characteristics. However, such large capacitors increase the size of the DC link and so the overall size of the power supply. The present disclosure however, because of the multi-phase power input, may permissibly employ a relative low DC link capacitance, because the energy storage requirements of the DC link may accordingly be relatively low. This low capacitance requirement may desirably enable the use of relatively small capacitors, and so minimise a physical size of the power supply.

In some instances however, a low DC link capacitance may disadvantageously reduce the degree to which the DC link filters switching currents generated by the PWM switching of the inverters. This could undesirably result in switching currents due to PWM appearing in the DC link voltage as switching frequency ripple, which may then pass across the DC link and introduce additional high frequency currents into the power source. These current emissions due the switching frequency may disadvantageously add to the losses and thus the heating in the power source.

The present disclosure may however desirably mitigate the high frequency current emissions to the power source resulting from the inverter PWM switching by the controller controlling the plurality of inverters to cause the PWM pulses of the AC power outputs of the inverters to be mutually phase-shifted. The phase-shifted PWM harmonics may thereby cancel each other, and harmonic emissions to the power source may desirably be reduced. As a result, the DC link may permissibly be configured to have a relatively small capacitance, and so use relatively small capacitors, thereby reducing a size of the power supply.

In an implementation, the controller is configured to control the switching of the inverters to cause the PWM pulses of the inverters power outputs to be mutually phase-shifted according to the equation:

$$\theta_p(k) = \frac{2\pi(k-1)}{N}$$

wherein $\theta_p$ is the phase shift-angle expressed in radians, for the inverter number of k where k=1,2,...N, where N is the total number of inverters being controlled by the at least one controller.

In an implementation, the at least one rectifier and the at least one DC link comprises a plurality of rectifiers and a corresponding plurality of DC links, each of the rectifiers being configured to convert multi-phase AC power input from an AC power source into DC power and output the DC power to a respective one of the DC links, and each of the inverters is configured to convert DC power in a respective one of the DC links and output the PWM pulsed AC power suitable for powering the at least one electrical device.

In an implementation, the at least one electrical device comprises a plurality of electrical devices, and each of the inverters is configured to output the PWM pulsed AC power to a respective one of the electrical devices.

In an implementation, the plurality of inverters are located mutually remotely, and for each of the inverters the respective DC link and rectifier is located locally to the inverter.

In an implementation, the plurality of rectifiers have a common connection to the AC power source. This may thereby cause the harmonic emissions to cancel each other prior to emissions being induced in the power source. The AC power source could, for example, comprise a mains electrical distribution grid.

In an implementation, the at least one DC link and the plurality of inverters are configured such that the at least one DC link has a cumulative capacitance in the range of 1 to 10 nanofarad per Watt of AC power output of the plurality of inverters. In other words, the one or more DC links may have a relatively low capacitance in comparison to the rated power outputs of the inverters.

In an implementation, the controller comprises a communication system and a plurality of local control modules each located locally to a respective one of the plurality of inverters and being connected to the communication system, the local control modules being configured to control the switching of the plurality of inverters based on at least one control signal communicated via the communication system.

In an implementation, a local control module of the plurality of local control modules is configured to generate the at least one control signal and transmit the at least one control signal via the communication system to other of the plurality of local control modules, and the other of the plurality of local control modules are configured to control the switching of the respective inverter based on the at least one control signal.

In an implementation, the controller further comprises a remote control module located remotely of at least one of the plurality of inverters, the remote control module being configured to generate the at least one control signal and communicate the at least one control signal to the local control modules via the communication system.

In an implementation, the power supply system is configured as a motor drive system for supplying electrical power to at least one electric motor.

A second aspect of the present disclosure provides a system comprising at least one electric motor and a motor drive system configured to supply electrical power to the at least one electric motor, the motor drive system being in accordance with the preceding statement.

A third aspect of the present disclosure provides a method of controlling a power supply system to supply electrical to at least one electrical device, comprising: receiving multi-phase AC power from an AC power source, converting, using at least one rectifier, the multi-phase AC power into DC power, and outputting the DC power to at least one DC link, and converting, using a plurality of inverters, DC power in the at least one DC link into AC power and outputting respective pulse-width modulated (PWM) pulsed AC power outputs suitable for powering the at least one electrical device, and wherein the converting DC power into AC power using the plurality of inverters comprises controlling the switching of the plurality of inverters to cause the PWM pulses of the inverters power outputs to be mutually phase-shifted.

in an implementation, the controlling the switching of the inverters comprises controlling the switching of the inverters to cause the PWM pulses of the inverters power outputs to be mutually phase-shifted according to the equation:

$$\theta_p(k) = \frac{2\pi(k-1)}{N}$$

wherein $\theta_p$ is the phase shift-angle expressed in radians, for the inverter number of k where k=1,2,...N, where N is the total number of inverters being controller by the at least one controller.

A fourth aspect of the present disclosure provides a computer program comprising instructions, which, when executed by a computer, cause the computer to carry out the method of the third aspect of the present disclosure.

A fifth aspect of the present disclosure provides a data storage apparatus having stored thereon the computer program of the fourth aspect of the present disclosure.

These and other aspects of the invention will be apparent from the embodiment(s) described below.

Brief Description of the Drawings

In order that the present invention may be more readily understood, embodiments of the invention will now be described, by way of example, with reference to the accompanying drawings, in which:

Figure 1 shows schematically an example of an industrial installation comprising a power supply system in which aspects of the present disclosure may be utilised;

Figure 2 shows schematically the power supply system in further detail;

Figure 3 shows schematically a motor drive of the power supply system;

Figure 4 shows schematically a table of vectors representing electrical currents in the power supply system;

Figure 5 shows schematically plots of simulated electrical characteristics;

Figure 6 shows schematically further plots of simulated electrical characteristics;

Figure 7 shows schematically a controller of the power supply system;

Figure 8 shows schematically operations involved in a method for controlling the power supply system; and

Figure 9 shows schematically further operations involved in the method for controlling the power supply system.

Detailed Description of the Disclosure

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

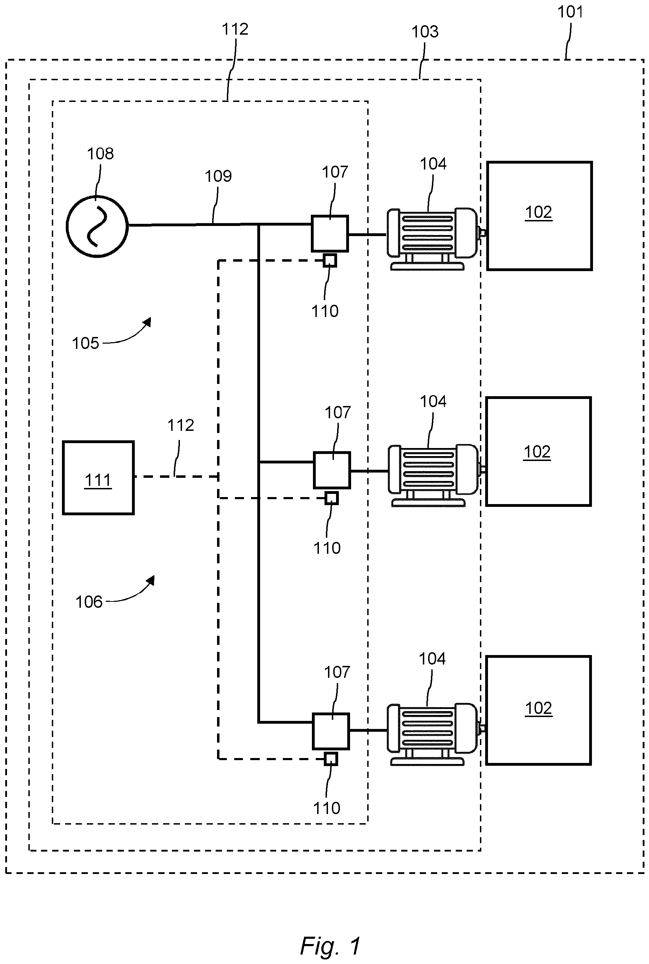

Figure 1 depicts schematically an example of an industrial installation in which aspects of the present disclosure may be utilised. The industrial installation 101 comprises a plurality of industrial machines 102, and a motor system 103. The industrial machines 102 could, for example, comprise manufacturing machinery, or machines for performing other industrial processes.

The motor system 103 comprises a plurality of alternating current (AC) electric motors 104, and a power supply system indicated generally at 112. The power supply system 112 comprises an electrical supply system indicated generally at 105, and a controller indicated generally at 106.

Each of the motors 104 is co-located with and provides rotary drive to a respective one of the industrial machines 102. The electrical supply system 105 comprises a plurality of motor drives 107, a connection to a source of multi-phase alternating current electrical power 108, and electrical conductors 109 for conductively coupling the motor drives 107 to the alternating current source 108. Each of the plurality of motor drives 107 is co-located with and drives a respective one of the electric motors 104. The motor system 103 has a configuration commonly known as 'decentralized', whereby the motor driver is integrated locally with the respective motor. This configuration confers practical advantages, such as improved modularity of the system.

The controller 106 comprises a plurality of local control modules 110, each local control module 110 integrated with a respective one of the motor drives 107, a remote control module 111 located remotely of the motor drives 107, and a communications network 112 for communicating the remote control module 111 with the local control modules 110.

In the example, the industrial installation comprises three industrial machines 102, and accordingly the motor system 103 comprises three motors 104 and three motor drives 107, but the industrial installation could instead comprise at least two or more industrial machines, and the motor system 103 may be adapted accordingly with fewer or more motors and motor drives.

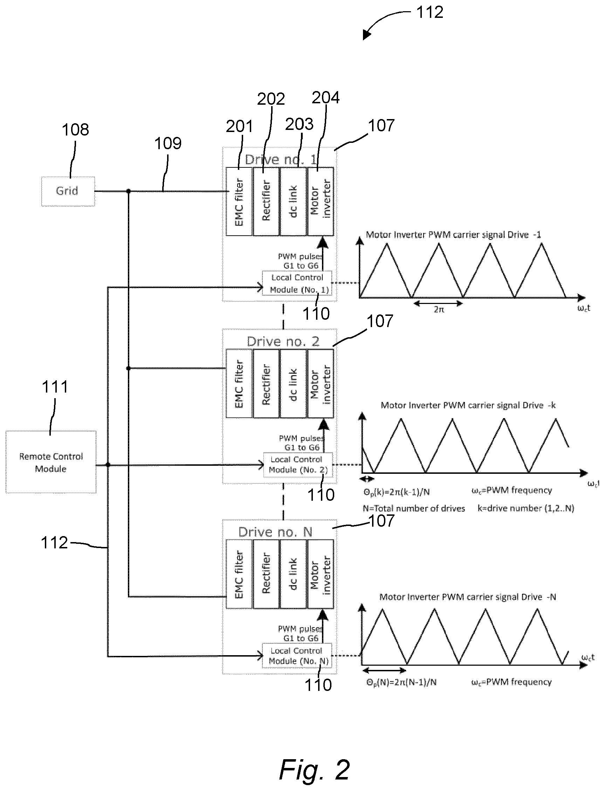

In aspects of the present disclosure, the electric motors 104 and industrial machinery 102 are conventional, whereas the present disclosure relates primarily to the power supply system 103, which will now be described in further detail with reference to Figures 2 to 9.

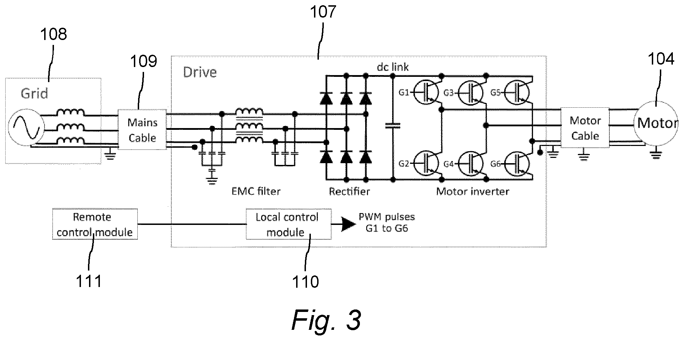

Figure 2 depicts the power supply system 103 in further detail, and Figure 3 depicts internal circuitry of a motor drive 107 of the power supply system 103. Each of the motor drives 107 is substantially identical in construction, and thus whilst only a single of the motor drives 107 is depicted in detail in Figure 3, the same disclosure applies to other of the motor drives also.

Referring to Figures 2 and 3 collectively, the source of multi-phase alternating current 107 could, for example, comprises a mains electrical power distribution grid, and in the example provides three-phase alternating current.

Each of the motor drives 107 comprises an electromagnetic compatibility (EMC) filter 201, a rectifier 202, a DC link 203, and an inverter 204.

The EMC filter 201 of each motor drive is connected to a conductor 109 of the electrical supply system 105 to thereby receive multi-phase electrical power from the power source 108. The EMC filter is provided to suppress electromagnetic interference between the power source 108, e.g., the mains grid, and the respective motor drive and motor. The diode rectifier circuit 202 of each motor drive receives the multi-phase alternating electrical current via the EMC filter, and converts the alternating current to direct current, and discharges the direct current to the respective DC link 203. The DC link 203 couples the rectifier 202 to the inverter 204, and functions primarily to buffer the direct current supplied to the inverter. The inverter 204 comprises plural switches for generating a multi-phase alternating current, in the example a three-phase alternating current, based on the direct current in the DC link 203. The controller 106 control the switches of each of the inverters 204 to generate a pulse-width modulated (PWM) three-phase alternating current.

In applications such as the exemplary decentralized configuration motor system, in which the motor driver is integrated with the motor, it is desirable for the motor driver to be physically compact, to reduce the overall size of the motor and driver package. Capacitors provided in a DC link may typically be relatively large in size, with the objective of achieving relatively high energy storage and smoothing characteristics. However, such large capacitors increase the overall size of the dc link, which may complicate integration of the motor driver with the motor.

Aspects of the present disclosure therefore relate to power supplies having a relatively small DC link, i.e., wherein a capacitance of the DC link is lower than is typical relative to the magnitude of the electric current carried by the DC link. This low capacitance requirement enables the use of relatively small capacitors, and so allows for the size of the DC link and so the motor driver to be minimised, thereby facilitating easy integration with the motor. For example, using the present disclosure, the cumulative DC link capacitance of the power supply could permissibly be as low as between 1 and 10 nano Farads per Watt of AC power that the inverters are configured to output. For example, in the present embodiment, where three DC links are provided to supply DC power to a respective one of the three inverters, if each of the inverters were rated to output 1 kilowatt of AC power, each DC link could have a capacitance in the range of 1 microfarad to 10 microfarad.

In some instances however, a low DC link capacitance reduces the degree to which the DC link filters switching currents. This may be disadvantageous, as in the present exemplary application, wherein switching currents due to PWM from the motor inverter 204 may appear in the DC link voltage as switching frequency ripple, which may then pass across the DC link and introduce additional high frequency currents into the power source 108, e.g., the mains grid. These current emissions due the switching frequency may disadvantageously add to the losses and thus the heating in the conductors 109 and in the power source 108 (e.g., in transformers of the grid), and also increase the reactive power draw.

The present disclosure may desirably mitigate the high frequency current emissions to the power source 108 resulting from the inverter PWM switching by the controller controlling the inverters of the plural motor 107 to cause the PWM pulses of the alternating current power outputs of the inverters to be mutually phase-shifted, as depicted in Figure 2.

The controller 106 may achieve the desired synchronisation of the inverters using the remote control module 111, which may determine appropriate control parameters for the plurality of motor drives under control, and may then transmit appropriate control signal(s) to the plural local controllers 110, such that based on the control signals each local control module 110 may generate PWM pulses having the desired phase characteristics to control the switches of the respective inverter. The control signals may function as a timing signal to be used by the local control modules to cause the inverter to generate appropriately timed PWM pulses.

The controller 106 may control the PWM switching of the inverters according to equation 1:

$$\theta_p(k) = \frac{2\pi(k-1)}{N} \qquad \qquad \text{Equation 1.}$$

Where $\theta_p$ is carrier the phase shift angle (in radians) for the inverter number of $k$ where $k = 1, 2, ... N$, where $N$ is the total number of inverters being controlled by the control system x. By this method, the dominant PWM harmonics centred at $f_c$ of the order $f_c \pm nf_o$ with $n = 1,2,3..$ (where $f_o$ is fundamental frequency and $f_c$ is the PWM switching frequency of the inverter and $\omega_c = 2\pi f_c$) cancel each other and are eliminated from the grid currents. Additionally, with increasing number of motor drives, and so inverters under control, the method can eliminate PWM harmonics from the grid current up to frequencies of $(N - 1)f_c$.

The ability of the controller 106 to synchronise the inverters of the plural drives could be achieved by means alternative to the example configuration depicted, for example, using field bus communication, by a programmable logic controller, direct connection between the drives, wherein one of the local control modules functions as a master controller, and the other of the local control modules as slave control modules, and/or by utilising cloud connectivity whereby a central control function is performed using cloud-based computing resources.

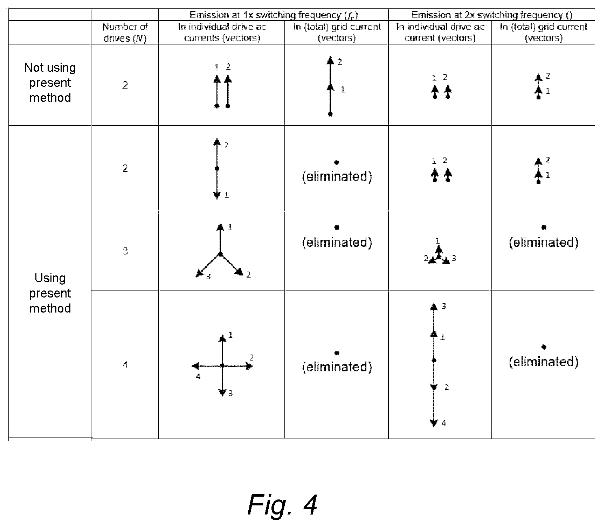

Figure 4 depicts schematically individual motor drive alternating vectors and total grid current vectors using the phase-shifting control method of the present disclosure, and also the same without phase-shifting control for comparison. In the Figure, controlled PWM carrier signals have random phase angle, whereas for comparison purposes the PWM carrier angles are assumed to be zero for the case of not using the disclosed control method.

Referring to the Figure, it can be observed that the presently disclosed phase-shifting of the PWM AC outputs may desirably enable reduction, or even elimination, of the total grid currents. This may desirably reduce the cable (and transformer) losses and heating, and also reduce the harmonic content in the grid, which may desirably contribute to compliance with various regulatory standards regulating harmonic emissions to the grid, e.g., upcoming harmonic standard IEC 61000-3-10. The phase-shifting of the outputs may also desirably enable permissible reduction in the size of the EMC filters 201.

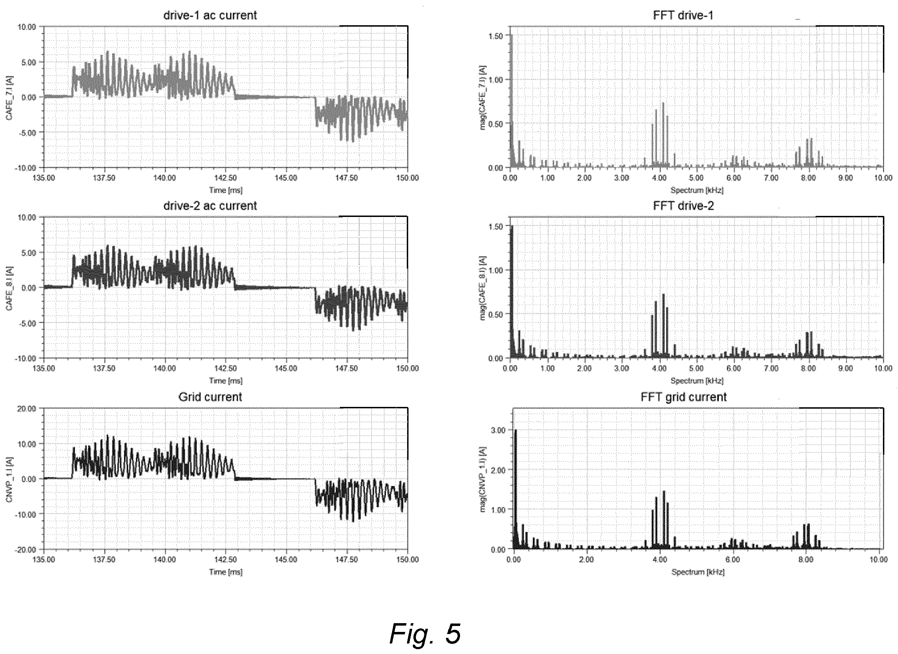

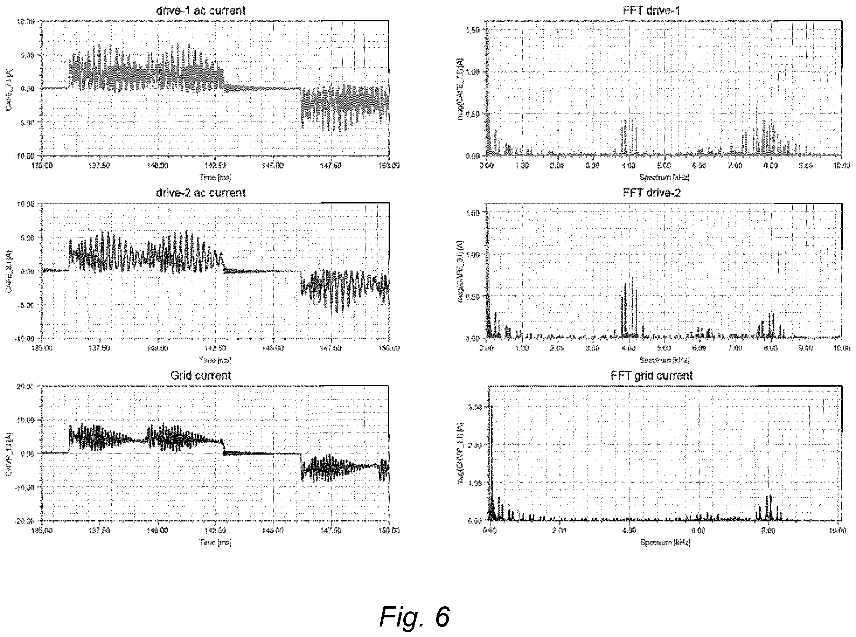

Figures 5 and 6 show plots of simulated current characteristics of a motor system, similar to motor system 103 except in that only two motors and motor drives exist. Figure 5 depicts the simulation results where the present phase-shifted PWM control method is not utilised, for comparison purposes. Whereas Figure 6 depicts the simulation results where the present phase-shifted PWM control method is utilised. The plots depict the individual drive ac currents, the total grid currents (only one phase is shown for clarity), and the corresponding fast Fourier transform frequency spectrums.

In the simulations, two decentralized motor drives each rated 1.5kW are employed, and the following conditions are assumed: (a) motor PWM switching frequency of 4 kHz, and (b) strong grid with short circuit ratio of 1.22e4. Referring firstly to Figure 5, it can been seen that the drive ac currents have high frequency harmonics which correspond to multiples of 4 kHz (which is the motor inverter switching frequency). These current eventually appear in the grid current causing additional losses and heating in the power supply network, e.g., in the transformers and cables.

Whereas, Figure 6 demonstrates the effectiveness of using the proposed phase shifted PWM method. Here, the individual drive ac currents are similar as in Figure 5 but the total grid current is reduced and so too are the current emissions reduced, as indicated by the lower amplitude of grid current which is ~9A in Figure 6 compared to ~13A in Figure 5. The harmonic spectrum also shows that the harmonics around 4 kHz in the individual ac currents are eliminated from the grid current as they cancel each other out when using the presently disclosed method, as previously discussed with reference to Figure 4.

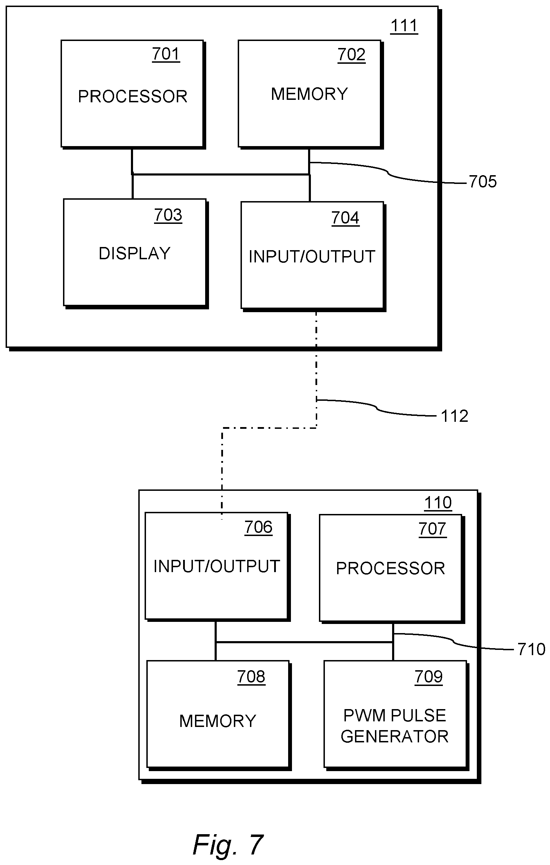

Figure 7 depicts an example implementation of the controller 106, comprising the remote control module 111 and the plurality of local control modules 110. In Figure 7 only a single of the local control modules 110 is shown, but the same disclosure applies to the other local control modules.

In the example, the remote control module 111 comprises a processor 701, memory 702, display 703, input/output device 704, and system bus 705. Each of the local control modules 110 comprises an input/output device 706, processor 707, and a PWM pulse generator 709. The remote control module 111 communicates with the local control modules 110 via communications network 112.

Processor 701 of the remote control module 111 is configured for execution of instructions of a computer program to generate control signals for controlling the PWM switching of the inverters 204 of the motor drives. Memory 702 is configured for non-volatile storage of the computer program, defining machine-readable instructions, for execution by the processor, and for serving as read/write memory for storage of operational data associated with computer programs executed by the processor 701. Display 703 is configured for displaying a graphical representation of data associated with the computer program and/or the operation of the inverters 204, to aid a user's interaction with the controller. Input/output interface 704 is configured for connection of the remote control module 111 to the plural local control modules 110 via communication system 112, and also for connection of a human-machine interface device to permit user interaction with the controller 106. The components 701 to 704 of the remote control module 111 are in communication via system bus 705.

Input/output device 706 of the local control module 110 is configured for connection of the local control module 110 to the remote control module 111 via communication system 112, and also for connection to electrical supply system 105. Processor 707 is configured for execution of instructions of a computer program to receive the control signals generated by the remote control module 111, and for controlling the PWM pulse generator 709. Memory 708 is configured for non-volatile storage of the computer program, defining machine-readable instructions, for execution by the processor 707, and for serving as read/write memory for storage of operational data associated with computer programs executed by the processor 707. PWM pulse generator 709 is configured for generating PWM pulse data to control the inverters 204. The components 706 to 709 of the local control module 110 are in communication via system bus 710.

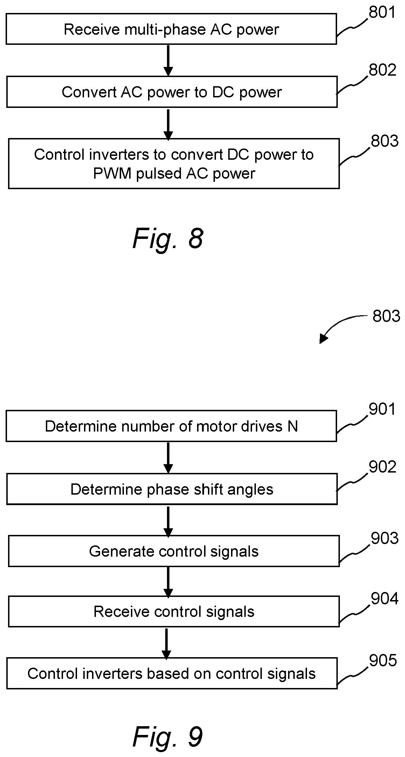

Referring next to Figure 8, in examples a method of controlling the power supply system 112 to supply electrical power to the motors 104 comprises three operations.

At operation 801, each of the motor drives 107 is coupled to the three-phase AC power source 108, for example, by operation of switchgear.

At operation 802, the rectifier 201 of each motor drive is controlled, e.g., by a control system similar in construction to controller 106, to convert the received AC power into DC power, which DC power is then applied to the DC link 203.

At operation 803, the inverter 204 of each motor drive is controlled, using the controller 106 to convert DC power in the DC link 203 into three-phase PWM AC power, wherein each of the motor drives 107 is controlled such that the phase angles of the outputs of the motor drives are mutually different.

Referring next to Figure 9, in examples operation 803 implemented by controller 106 for controlling the inverters 204 of the motor drives comprises five operations.

At operation 901, the computer program causes the processor 702 of the remote control module 111 to determine a number N of connected motor drives under the control of the controller 106. Operation 901 could, for example, involve the controller receiving a user input defining a number of connected drives via a connected human-machine interface, or could alternatively, for example, involve the remote control module 111 interrogating connected local control modules 110 to determine a number of connected local control modules.

At operation 902, the computer program causes the processor 702 of the remote control module 111 to determine appropriate phase shift angles for the PWM outputs of the inverters, for example, using equation 1 as previously described with reference to Figures 2 and 3.

At operation 903, the computer program causes the processor 702 of the remote control module 111 to generate control signals representing the phase shift angles determined at operation 902, and output the control signals via the communications network 112 to the local control modules 110.

At operation 904, the computer program causes the processors 707 of the local control modules 110 to receive the control signals output by the remote control module 111 at operation 903, and to control the switching of the respective inverter 204 to generate a PWM AC output having a desired phase angle.

In an example alternative, instead of the remote control module 111 generating control signals to control and synchronise the local control modules 110, one of the local control modules 110 could fulfil that role and the remote control module 111 could be omitted. For example, one of the local control modules 110 could generate the control signals, e.g., a clock signal, that other of the local control modules 110 could then receive and use to generate appropriately timed PWM pulse signals to control the respective inverter. In another alternative, the local control modules 110 could be omitted, and the inverters could be controlled by a remotely located control system, such as remote control module 111, with minimal or no control circuity located onboard the motor drives for controlling the inverters. Many other control options may be utilised to achieve the synchronisation of the inverter outputs.

The system and apparatus described above may use dedicated processor systems, micro controllers, programmable logic devices, microprocessors, or any combination thereof, to perform some or all of the operations described herein. Some of the operations described above may be implemented in software and other operations may be implemented in hardware. Any of the operations, processes, and/or methods described herein may be performed by an apparatus, a device, and/or a system substantially similar to those as described herein and with reference to the illustrated figures. References herein to a device, or similar, do not imply a unitary apparatus, and instead include a system of components, which may or may not be co-located.

The processor may execute instructions or "code" stored in memory. The memory may store data as well. The processing device may include, but may not be limited to, an analog processor, a digital processor, a microprocessor, a multi-core processor, a processor array, a network processor, or the like. The processing device may be part of an integrated control system or system manager, or may be provided as a portable electronic device configured to interface with a networked system either locally or remotely via wireless transmission.

The memory may be integrated together with the processing device, for example RAM or FLASH memory disposed within an integrated circuit microprocessor or the like. In other examples, the memory may comprise an independent device, such as an external disk drive, a storage array, a portable FLASH key fob, or the like. The memory and processing device may be operatively coupled together, or in communication with each other, for example by an I/O port, a network connection, or the like, and the processing device may read a file stored on the memory. Associated memory may be "read only" by design (ROM) by virtue of permission settings, or not. Other examples of memory may include, but may not be limited to, WORM, EPROM, EEPROM, FLASH, or the like, which may be implemented in solid state semiconductor devices. Other memories may comprise moving parts, such as a known rotating disk drive. All such memories may be "machine-readable" and may be readable by a processing device.

Operating instructions or commands may be implemented or embodied in tangible forms of stored computer software (also known as "computer program" or "code"). Programs, or code, may be stored in a digital memory and may be read by the processing device. "Computer-readable storage medium" (or alternatively, "machine-readable storage medium") may include all of the foregoing types of memory, as well as new technologies of the future, as long as the memory may be capable of storing digital information in the nature of a computer program or other data, at least temporarily, and as long at the stored information may be "read" by an appropriate processing device. The term "computer-readable" may not be limited to the historical usage of "computer" to imply a complete mainframe, mini-computer, desktop or even laptop computer. Rather, "computer-readable" may comprise storage medium that may be readable by a processor, a processing device, or any computing system. Such media may be any available media that may be locally and/or remotely accessible by a computer or a processor, and may include volatile and non-volatile media, and removable and non-removable media, or any combination thereof.

A program stored in a computer-readable storage medium may comprise a computer program product. For example, a storage medium may be used as a convenient means to store or transport a computer program. For the sake of convenience, the operations may be described as various interconnected or coupled functional blocks or diagrams. However, there may be cases where these functional blocks or diagrams may be equivalently aggregated into a single logic device, program or operation with unclear boundaries.

While the application describes specific examples of carrying out embodiments of the invention, those skilled in the art will appreciate that there are numerous variations and permutations of the above described systems and techniques that fall within the spirit and scope of the invention as set forth in the appended claims. For example, while specific terminology has been employed above to refer to electronic design automation processes, it should be appreciated that various examples of the invention may be implemented using any desired combination of electronic design automation processes.

One of skill in the art will also recognize that the concepts taught herein can be tailored to a particular application in many other ways. In particular, those skilled in the art will recognize that the illustrated examples are but one of many alternative implementations that will become apparent upon reading this disclosure.

Although the specification may refer to "an", "one", "another", or "some" example(s) in several locations, this does not necessarily mean that each such reference is to the same example(s), or that the feature only applies to a single example.

## Claims

1. A power supply system for supplying electrical power to at least one electrical device, the system comprising:

   at least one rectifier and at least one DC link, the at least one rectifier being configured to convert multi-phase AC power input from an AC power source into DC power and output the DC power to the at least one DC link;
   a plurality of inverters, each inverter configured to convert DC power in the at least one DC link into AC power and output pulse-width modulated (PWM) pulsed AC power suitable for powering the at least one electrical device, and
   a controller configured to control switching of the plurality of inverters to cause the PWM pulses of the inverters power outputs to be mutually phase-shifted.

2. The power supply system of claim 1, wherein the controller is configured to control the switching of the inverters to cause the PWM pulses of the inverters power outputs to be mutually phase-shifted according to the equation:

$$\theta_p(k) = \frac{2\pi(k-1)}{N}$$

   wherein $\theta_p$ is the phase shift-angle expressed in radians, for the inverter number of k where k=1,2,...N, where N is the total number of inverters being controlled by the at least one controller.

3. The power supply system of claim 1, wherein the at least one rectifier and the at least one DC link comprises a plurality of rectifiers and a corresponding plurality of DC links, each of the rectifiers being configured to convert multi-phase AC power input from an AC power source into DC power and output the DC power to a respective one of the DC links, and each of the inverters is configured to convert DC power in a respective one of the DC links and output the PWM pulsed AC power suitable for powering the at least one electrical device.

4. The power supply system of claim 3, wherein the at least one electrical device comprises a plurality of electrical devices, and each of the inverters is configured to output the PWM pulsed AC power to a respective one of the electrical devices.

5. The power supply system of claim 4, wherein the plurality of inverters are located mutually remotely, and for each of the inverters the respective DC link and rectifier is located locally to the inverter.

6. The power supply of claim 3, wherein the plurality of rectifiers have a common connection to the AC power source.

7. The power supply system of claim 1, wherein the at least one DC link and the plurality of inverters are configured such that the at least one DC link has a cumulative capacitance in the range of 1 to 10 nanofarad per Watt of AC power output of the plurality of inverters.

8. The power supply system of claim 1, wherein the controller comprises a communication system and a plurality of local control modules each located locally to a respective one of the plurality of inverters and being connected to the communication system, the local control modules being configured to control the switching of the plurality of inverters based on at least one control signal communicated via the communication system.

9. The power supply system of claim 8, wherein a local control module of the plurality of local control modules is configured to generate the at least one control signal and transmit the at least one control signal via the communication system to other of the plurality of local control modules, and the other of the plurality of local control modules are configured to control the switching of the respective inverter based on the at least one control signal.

10. The power supply system of claim 8, wherein the controller further comprises a remote control module located remotely of at least one of the plurality of inverters, the remote control module being configured to generate the at least one control signal and communicate the at least one control signal to the local control modules via the communication system.

11. The power supply system of claim 1, configured as a motor drive system for supplying electrical power to at least one electric motor.

12. A system comprising at least one electric motor and a motor drive system configured to supply electrical power to the at least one electric motor, the motor drive system being in accordance with claim 11.

13. A method of controlling a power supply system to supply electrical to at least one electrical device, comprising:

receiving multi-phase AC power from an AC power source,
converting, using at least one rectifier, the multi-phase AC power into DC power, and outputting the DC power to at least one DC link, and
converting, using a plurality of inverters, DC power in the at least one DC link into AC power and outputting respective pulse-width modulated (PWM) pulsed AC power outputs suitable for powering the at least one electrical device, and
wherein the converting DC power into AC power using the plurality of inverters comprises controlling the switching of the plurality of inverters to cause the PWM pulses of the inverters power outputs to be mutually phase-shifted.

14. The method of claim 13, wherein the controlling the switching of the inverters comprises controlling the switching of the inverters to cause the PWM pulses of the inverters power outputs to be mutually phase-shifted according to the equation:

$$\theta_p(k) = \frac{2\pi(k-1)}{N}$$

wherein $\theta_p$ is the phase shift-angle expressed in radians, for the inverter number of k where k=1,2,...N, where N is the total number of inverters being controller by the at least one controller.

15. A computer program comprising instructions, which, when executed by a computer, cause the computer to carry out the method of claim 13.

16. A data storage apparatus having stored thereon the computer program of claim 15.

Fig. 1

*Fig. 2*

*Fig. 3*

| | Number of drives ($N$) | Emission at 1x switching frequency ($f_c$) | | Emission at 2x switching frequency () | |
|---|---|---|---|---|---|
| | | In individual drive ac currents (vectors) | In (total) grid current (vectors) | In individual drive ac current (vectors) | In (total) grid current (vectors) |
| Not using present method | 2 | | | | |
| Using present method | 2 | | • (eliminated) | | |
| | 3 | | • (eliminated) | | • (eliminated) |
| | 4 | | • (eliminated) | | • (eliminated) |

*Fig. 4*

Fig. 5

EP 4 687 270 A1

*Fig. 6*

*Fig. 7*

Receive multi-phase AC power — 801

↓

Convert AC power to DC power — 802

↓

Control inverters to convert DC power to PWM pulsed AC power — 803

*Fig. 8*

— 803

Determine number of motor drives N — 901

↓

Determine phase shift angles — 902

↓

Generate control signals — 903

↓

Receive control signals — 904

↓

Control inverters based on control signals — 905

*Fig. 9*

Europäisches
Patentamt

European
Patent Office

Office européen
des brevets

# EUROPEAN SEARCH REPORT

**Application Number**

EP 24 19 1567

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/153882 A1 (HONG BOK YOUNG [US] ET AL) 21 June 2012 (2012-06-21) * paragraph [0018] - paragraph [0032] * * figures 1-4 * | 1-16 | INV. H02M1/00 H02M1/12 H02M5/458 |
| X | EP 4 170 898 A1 (BAUMUELLER NUERNBERG GMBH [DE]) 26 April 2023 (2023-04-26) * paragraph [0002] - paragraph [0051] * * figures 1,6 * | 1,2,8, 10-14 | |
| A | BEECHNER T ET AL: "Asymmetric interleaving - a new approach to operating parallel converters", ENERGY CONVERSION CONGRESS AND EXPOSITION, 2009. ECCE. IEEE, IEEE, PISCATAWAY, NJ, USA, 20 September 2009 (2009-09-20), pages 99-105, XP031607801, ISBN: 978-1-4244-2893-9 * page 99 * | 2,14 | |

**TECHNICAL FIELDS SEARCHED (IPC)**

H02M

The present search report has been drawn up for all claims

| Place of search | Date of completion of the search | Examiner |
|---|---|---|
| The Hague | 7 January 2025 | Lochhead, Steven |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 19 1567

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2025

| Patent document cited in search report | Publication date | Patent family member(s) | Publication date |
|---|---|---|---|
| US 2012153882 A1 | 21-06-2012 | NONE | |
| EP 4170898 A1 | 26-04-2023 | CN 115996000 A | 21-04-2023 |
| | | DE 102021211779 A1 | 20-04-2023 |
| | | EP 4170898 A1 | 26-04-2023 |

EPO FORM P0459

For more details about this annex : see Official Journal of the European Patent Office, No. 12/82